Europäisches Patentamt

European Patent Office

Office européen des brevets

(11) Publication number: **0 652 560 A1**

## EUROPEAN PATENT APPLICATION
### published in accordance with Art. 158(3) EPC

(21) Application number: 94913792.1

(22) Date of filing: **21.04.94**

(86) International application number:
**PCT/JP94/00661**

(87) International publication number:
**WO 94/24667 (27.10.94 94/24)**

(51) Int. Cl.6: **G11B 20/10**

(30) Priority: **21.04.93 JP 116599/93**

(43) Date of publication of application:
**10.05.95 Bulletin 95/19**

(84) Designated Contracting States:
**DE FR GB**

(71) Applicant: **KABUSHIKI KAISYA ADVANCE**
**5-7, Nihonbashi Kobuna-cho**
**Chuo-ku**
**Tokyo 103 (JP)**

(72) Inventor: **ISHIBASHI, Hiromu**
**37-41, Hatunegaoka,**
**Hodogaya-ku**
**Yokohama-shi,**
**Kanagawa 240 (JP)**

(74) Representative: **Rinuy, Santarelli**
**14, avenue de la Grande Armée**
**F-75017 Paris (FR)**

(54) **APPARATUS FOR RECORDING AND REPRODUCING VOICE.**

(57) An apparatus capable of reproducing the voice of reading aloud a book for a sufficient period of time. At the time of reproduction, the speed of reading is variable, and the output voice is normal as in the normal speed reproduction. The apparatus comprises means for digitally storing voice signals in a mode that the voiceless parts are coded substantially; means for generating voices by reproducing the digital voice signals at a desired speed of speech; and means for adjusting the desired speed of the speech.

Fig. 1

## TECHNICAL FIELD

The present invention relates to a voice recording/reproducing device and, more specifically, to a voice reproducing device such as a device for learning and education or a voice-producing electronic book and the like.

## BACKGROUND ART

There has been proposed a device for reproducing voice by using a digital large-capacity recording medium such as CD-ROM or the like, the reproducing time, however, lasting for about 70 minutes at the longest. The reproduction of such a length may be enough for recording music but is not enough for recording the whole recitation of such a book as a paperback, a study book or the like. In particular, in the case of a learning device which is used by a user for understanding and recognition by repetitively playing the device and reproducing a clear voice while changing the speed such as lowering the speed for extended periods of time, the above-mentioned digital recording medium is far from being of practical use unless the contents of the study material are adjusted or omitted. Further increased difficulty is encountered when other storage media are used.

In addition, it was often required to intentionally adjust the speed of recitation during recording.

The object of the present invention is to provide a voice recording/reproducing device which is free from the above-mentioned problems inherent in the prior art, enables the voice data to be stored in sufficient amounts in a predetermined recording medium and further enables the voice output which is close to natural recitation to be obtained for an extended period of time at the time of the reproduction.

## DISCLOSURE OF THE INVENTION

In order to accomplish the above-mentioned object, the voice recording/reproducing device according to the present invention basically has the following technical constitutions.

That is, a voice reproducing device comprising a voice signal recording means for recording a voice signal of which a voiceless part is converted into a predetermined voiceless part indication data signal, and a voice reproducing means which reproduces the recorded voice signal at a desired speed of speech. Concretely, a voice recording/reproducing device comprising a voiceless part indication conversion means which converts a voiceless part included in an input voice signal into a predetermined voiceless part indication data signal, and a recording means for recording an input voice signal including the voiceless part indication data signal converted by the voiceless part indication conversion means. More concretely, a voice recording/reproducing device comprising a voiceless part indication conversion means which converts a voiceless part included in an input voice signal into a predetermined voiceless part indication data signal, a recording means for recording an input voice signal including the voiceless part indication data signal converted by the voiceless part indication conversion means, and a voice reproducing means for reproducing an input voice signal recorded in said recording means at a desired speed of speech, is provided.

Through intense study, the present inventors have realized a voice recording/reproducing device that can be used for a device for learning and education or for a voice-producing electronic book, by recording digital voice data in a recording medium by substantially deleting voiceless part, by adding voiceless time at the time of the reproduction, thus enabling the voice data to be recorded in sufficient amounts in the recording medium and, besides, making it possible to obtain voice output close to natural recitation for extended periods of time as a result of addition of the voiceless time during the reproduction.

## BRIEF DESCRIPTION OF DRAWINGS

Fig. 1 is a diagram illustrating a recording means according to an embodiment of the present invention;

Fig. 2 is a diagram illustrating a reproducing means according to an embodiment of the present invention;

Figs. 3(A), 3(B), 4(A) and 4(B) are diagrams for explaining an embodiment of the present invention;

Figs. 5(A) and 5(B) are diagrams illustrating a method of discriminating the length of a voiceless part according to the present invention;

Fig. 6 is a diagram illustrating another embodiment of the present invention;

Fig. 7 is a flow chart which concretely illustrates a voiceless part processing unit shown in Fig. 6;

Figs. 8(A) and 8(B) are diagrams illustrating another example of signals when the voiceless part is substantially deleted;

Fig. 9 is a block diagram illustrating the constitution according to another embodiment of the present invention;

Fig. 10 is a flow chart for discriminating the voiceless part according to the present invention;

Figs. 11 and 12 are flow charts illustrating the procedures of operation for executing the method of deleting a voiceless part according to another embodiment of Fig. 9;

Figs. 13(A) to 13(C) are diagrams illustrating examples for discriminating plus/minus component modes according to the present invention;

Fig. 14 is a flow chart for explaining the procedure of operation by a recombination means according to the embodiment of Fig. 9; and

Fig. 15 is a diagram of waveforms illustrating an input voice signal used in the present invention.

Best Mode for Carrying Out the Invention

A voice recording/reproducing device according to an embodiment of the present invention will now be described in detail with reference to the drawings.

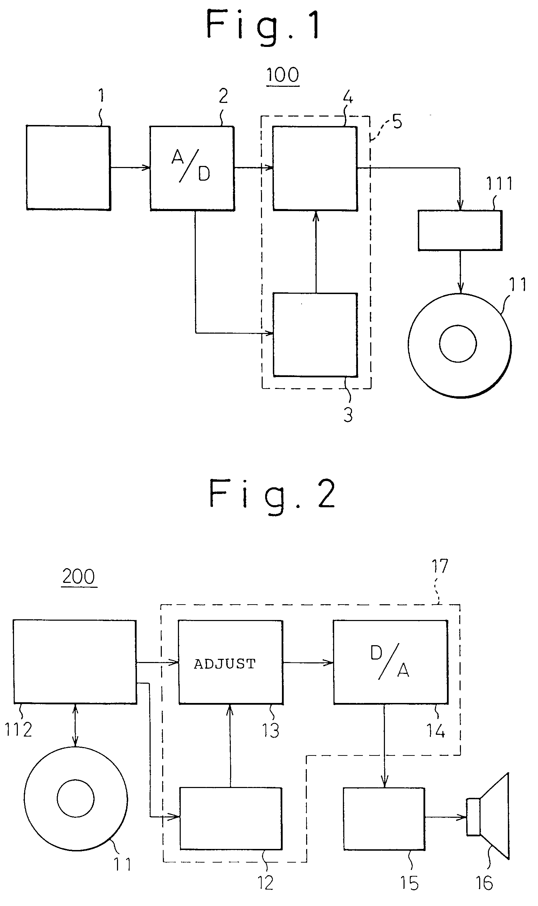

Fig. 1 is a block diagram which schematically illustrates the constitution of a recording means 100 for recording input voice signals in a voice recording/reproducing device according to an embodiment of the present invention. The recording means 100 of Fig. 1 is constituted by a voiceless part indication conversion means 5 which converts a voiceless part included in an input voice signal into a predetermined voiceless part indication data signal, and a recording means 11 for recording an input voice signal including the voiceless part indication data signal converted by the voiceless part indication conversion means 5.

The above embodiment will now be described in further detail.

In Fig. 1, reference numeral 11 denotes a recording medium which chiefly consists of a digital recording medium such as an optical disc, a magneto-optical disc or a magnetic disk, and 111 denotes a writing means constituted by a writing head, a head-driving driver, and the like. Reference numeral 1 denotes an analog voice input means constituted by a microphone, a filter, an amplifier and the like, and 2 denotes an A/D conversion means which converts an analog voice signal into a digital voice signal. The A/D conversion means 2 will often be provided with a digital signal compression means such as ADPCM. Reference numeral 3 denotes a voiceless part detection means which detects the voiceless part automatically or visually, and 4 denotes a conversion unit which receives output signals from the voiceless part detection means 3 and from the A/D conversion means 2, and deletes the voiceless part of the digital voice signal or converts it into another code based upon an input signal from the voiceless part detection means 3. According to the present invention, the voiceless part detection means 3 and the conversion unit 4 constitute the voiceless part indication conversion means 5. The conversion unit 4 may execute an algorithmic processing by using a CPU or a DSP. In this case, there will no be distinction between the two means 3 and 4. Fig. 1 illustrates the constitution in which the analog voice is first converted into a digital voice, and then the voiceless part is substantially deleted. The constitution, however, is not necessarily limited thereto only but may be one in which the voiceless part is substantially deleted during the step of digital conversion or at the time of producing analog voice.

In the present invention, the voiceless part in an input voice signal that is handled is a silent part or a part close to silent state between syllables or between clauses. In the present invention, the voiceless part indication conversion means 5 substantially deletes the voiceless part, i.e., deletes all or part of the voiceless part or converts the voiceless part into other code.

The method of converting such a voiceless part into other code may comprise, for example, converting it into a signal that deletes the voiceless part, or converting it into a signal of data related to the time of the voiceless part, or converting it into a signal of data that indicates the position where it exists in the input voice signal that contains the voiceless part.

Fig. 2 schematically illustrates the constitution of a voice reproducing means 200 used in the voice recording/reproducing device of the present invention.

Referring to Fig. 2, provision is made of a voice reproducing means 17 which reproduces at a desired speed of speech the input voice signals that are voice data stored in the recording medium 11 by the voice recording means 100 shown in Fig. 1.

Described below is the concrete constitution of the voice reproducing means 200 used in the voice recording/reproducing device of the present invention. That is, Fig. 2 illustrates the voice reproducing means 200 which hereinafter is referred to as reproduction unit, and wherein reference numeral 11 denotes the recording medium that is shown in Fig. 1.

Reference numeral 112 denotes a reading means which is constituted by a reading pick-up, a means for turning the recording means 11, and a means for sliding the reading pick-up.

Reference numeral 12 denotes a detection means which detects the voiceless part that has been substantially deleted from the digital voice output from the reading means 112, restores the detected voiceless part, or newly forms the voiceless part, or converts it into a signal having an equivalent meaning, and outputs it.

Reference numeral 13 denotes an adjusting means which combines a digital voice signal output from the reading means 112 and a voiceless signal output from the detection means 12, and outputs a combination signal. The detection means 12 and the adjusting means 13 constitute the voice reproducing means 17 of the present invention. The adjusting means 13 may often be algorithmically implemented by using a CPU or a DSP one-chip microcomputer. In this case, there is no need to distinguish the two means 12 and 13, and these means need have an algorithm such as a program routine which converts at least the deleted voiceless part into any voiceless time or a voiceless digital signal having the original voiceless time, and outputs it in combination with the digital voice.

Reference numeral 14 denotes a D/A conversion means which converts the digital voice output from the adjusting means 13 into an analog voice. In this case, when the A/D conversion means 2 shown in Fig. 1 has a compression means, the D/A conversion means 14 has a restoration means. The D/A conversion means 14 may constitute the above-mentioned voice reproducing means 17, or may serve as the detection means 12 or the adjusting means 13.

Reference numeral 15 denotes an amplifier means which electrically amplifies the analog voice. The amplifier means 15 may have frequency filtering characteristics.

Reference numeral 16 denotes a voice generation means which is constituted by either a speaker or an earphone or by both of them. The recording unit and the reproducing unit may be constituted together as a unitary structure or may be separately constituted.

Described below with reference to Figs. 1 and 2 are operations of the recording means 100 and of the reproducing means 200 in the voice recording/reproducing device of the present invention.

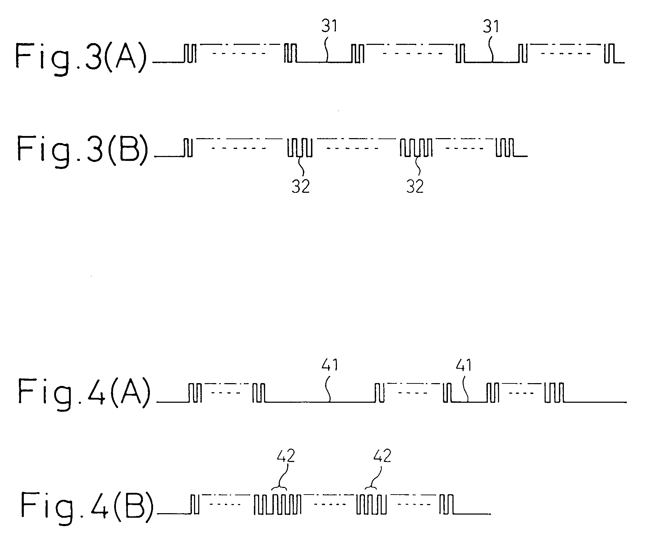

In the recording unit 100 shown in Fig. 1, an analog voice input to the analog voice input unit 1 is filtered, amplified, and is then converted through the A/D conversion means 2 into a digital voice signal as shown in Fig. 3(A). The digital voice signal is input to the voiceless part detection means 3 and to the conversion means 4. The voiceless part detection means 3 detects a voiceless part 31 as shown in Fig. 3(A), and the conversion means 4 substantially deletes the voiceless part 31 as designated at 32 in Fig. 3(B) and, instead, converts it into a digital voice signal 32 (Fig. 3(B)) that indicates a position where the voiceless part 31 is substantially deleted, and writes it into the recording medium 11 via the writing means 111.

A sequence of digital voice signals is very complex and is, hence, roughly drawn. A sequence of digital voices covers a syllable, a clause, a breath group, or from a voiceless part to a next voiceless part.

Referring next to Fig. 2 which illustrates the reproducing means 200 for reproducing digital voice signals recorded in the recording medium 11, the recording means 11 is connected to the reading means 112, and digital voice signals are read out from the recording means 11 while substantially deleting the voiceless parts and are output to the detection means 12 and to the adjusting means 13 that are constituting the voiceless part indication conversion means 17. The detection means 12 detects a voiceless part indication data signal such as the voiceless part 32 that has been deleted as shown in Fig. 3(B), converts it into a voiceless digital signal having a predetermined time interval or the original time interval, and outputs it to the adjusting means 13. The adjusting means 13 combines the deleted portion of the digital voice signal from which the voiceless part has been substantially deleted that is input from the recording means 11 with the voiceless digital signal input from the detection means 12, and outputs the combined digital voice signal (Fig. 3(A)) to the D/A conversion means 14. The D/A conversion means 14 converts the combined digital voice signal that is input into an analog voice signal. The amplifier means 15 amplifies the analog voice signal, filtrates it depending upon the case, and outputs it to the voice generation means 16 which outputs the voice using a speaker or an earphone as a medium. At this moment, the speech speed can be freely adjusted by numerically adding or subtracting the amount of voiceless digital signals, and slow-speed speech can be easily realized. A knob for adjustment will often be provided on the device so that the user is allowed to effect the adjustment.

Moreover, a digital voice signal from which voiceless part is substantially deleted and which includes a suitable conversion indication data signal may often be recorded into the recording medium as shown in Figs. 4(A) and 4(B). In the recording unit of Fig. 1, the voiceless part detection means 3 and the conversion means 4 replace the voiceless part (41) in the original digital voice signal shown in Fig. 4(A) by other code 42 as shown in Fig. 4(B). The digital voice signal shown in Fig. 4(B) is written into the recording means 11 via the writing means 111. The other code 42 shown in Fig. 4(B) consists of several bits serving not only as a simple indication but also as data related to a voiceless time interval and data representing the nature of the voiceless part.

In the reproduction unit 200 of Fig. 2, the recording means 11 records digital voice signals shown in Fig. 4(B). The reading means 112 reads out the digital voice signals recorded in the recording means 11, from which the voiceless part is substantially deleted, and outputs them to the detection means 12 and to the adjusting means 13.

The detection means 12 detects a code that has been substituted for the voiceless part deleted from the input digital voice signal, decodes the code, and outputs a signal that complies with the decoded content to the adjusting means 13. The content of the other code 42 shown in Fig. 4(B) is a time width of the original voiceless part or the like as described above. In response to the signal input from the detection means 12 and the digital voice signal from which the voiceless part has been deleted input from the reading means 112, the adjusting means 13 outputs to the D/A conversion means 14 a digital voice signal (Fig. 4(A)) to which the voiceless part is added or in which the voiceless part is reproduced. The subsequent operation of the D/A conversion means 14 is the same as the one mentioned earlier and is not described here.

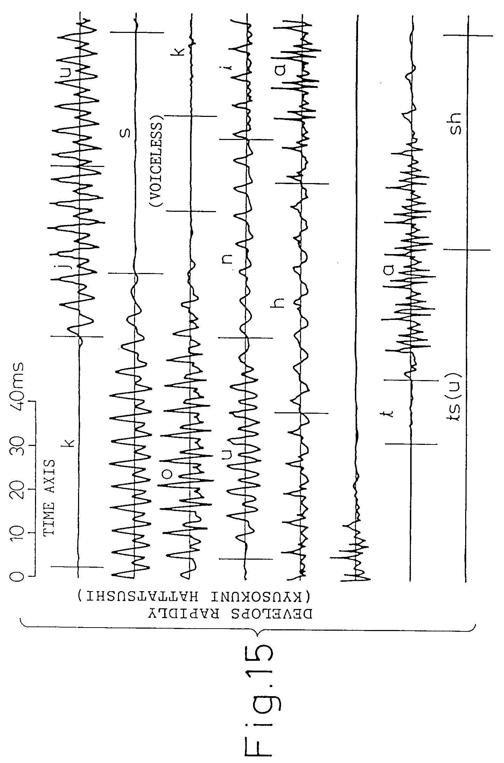

Next, described below is another algorithm of the present invention which detects the voiceless part from the analog voice input signal, substantially deletes the voiceless part, and replaces the duration thereof by a code that represents a time function. Fig. 15 illustrates an input voice signal used in the present invention to which only, however, the input voice signal is in no way limited.

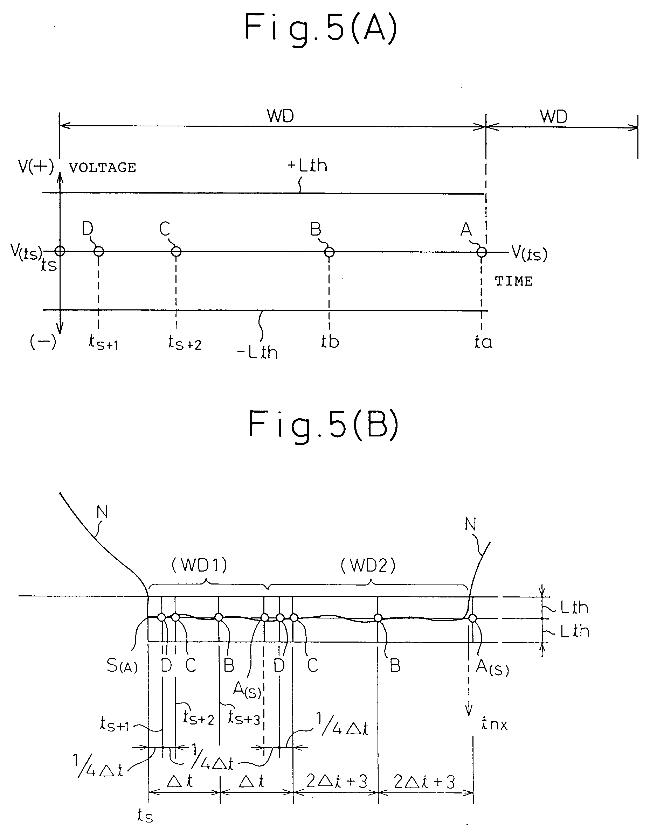

In the recording unit of Fig. 1, a window (WD) of Fig. 5(A) is set in advance for the voiceless part. Lth denotes a threshold value for judging the signal to be voiceless and has been set in the (+)(-) directions. Signs A to D of Fig. 5(A) has been determined in advance, and initial values of time widths among the signs A to D have been determined in advance, too. The time widths are only initial values and can be varied. At the present moment ts, a minimum tn is found that satisfies the following relation (1) from a moment ts + 1 to a moment ta,

$$| V(tn) - V(ts) | > Lth \qquad (1)$$

When tn is not found, the sign A is selected, and a next window (WD1) is set with the sign A as the present moment ts, and the operation is carried out to find a next tn in the window shown in Fig. 5-(A).

In other cases, for instance, the sign B is selected when tb<tn≦ta and, then, no sign is imparted. Similarly, hereinafter, the sign C is selected when ts + 2<tn<tb, the sign D is selected when tn≦ts + 2 and, then, no sign is imparted.

Then, the processing for deleting a voiceless part is resumed when | V(ti) - V(ts) | ≦ Lth. At this moment, a sign is imparted to indicate the resumption.

When the sign A is selected repetitively or at a high frequency, the whole or part of the time widths among the signs A to D is lengthened.

V(ti) represents a voltage at a moment ti which precedes or succeeds the present moment ts by a predetermined amount of time. This embodiment uses four signs A to D that can be expressed by using two bits. Therefore, the voiceless part on the recording means is substituted by a small amount of sign sequence. The number of signs should be small though there is no particular limitation. The signs A to D determined in the above-mentioned step are recorded into the recording medium 11 via the writing means 111.

Described below with reference to Fig. 5(B) is another method of imparting a discrimination sign by detecting the time width of the voiceless part of the input voice signal according to the present invention.

In this embodiment as shown in Fig. 5(B), a first window (WD1) is set, and four kinds of check points A to D having different time factors are set within the window. If the initial time of the window WD1 is ts, a check point D is disposed at a position that corresponds to the time ts + 1. A time interval between the initial time and the check point D is denoted by 1/4•Δt.

Similarly, a check point C is disposed at a position that corresponds to the time ts + 2, and a time interval between the check point D and the check point D is denoted by 1/4•Δ.

A check point B is disposed at a position corresponding to the time ts + 3, and a time interval between the check point C and the check point B is denoted by Δt.

Moreover, the checkpoint A is disposed at a position corresponding to the time ts + 4, and a time interval between the check point B and the check point A is denoted by Δt.

After the window WD1 is set, a voice signal N is input from an external unit, and an input voice voltage V(n) is compared with the above-mentioned threshold value Lth that has been determined in advance.

In this embodiment, the voltage V(n) of the voice input signal becomes smaller than the threshold value Lth at the time ts, and the above-mentioned relation (1) is satisfied.

At this moment, the window WD1 is set, and the input voice voltage V(n) is compared with the threshold value Lth continuously maintaining a predetermined sampling time interval during the time of inspection set in the window WD1.

In the example of Fig. 5(B), the input voice signal N satisfies the above-mentioned relation (1) within a time ts + 4 that is determined in advance in the window WD1. During this time, therefore, it is so judged that the voiceless part is continuing, and a discrimination sign, i.e., sign A is imparted to the voiceless part during that moment.

In this embodiment, furthermore, when it is judged that the voiceless part is continuing at a moment when the time ts + 4 has passed, a next window WD2 is set at this moment.

That is, the initial time of the window, i.e., ts is started again at the time ts + 4 at the check point A.

In this embodiment, furthermore, the voiceless part continues in the window WD1. That is, since it is expected that the voiceless part lasts long even in the next window WD2, the time of the second window WD2 is set to last longer than the time set for the first window WD1.

That is, if the initial time of the window WD2 is ts, the check point D is disposed at a position corresponding to the time ts + 1, and a time interval between the initial time and the check point D is denoted by $1/4 \cdot \Delta t$.

Similarly, the check point C is disposed at a position corresponding to the time ts + 2, and a time interval between the check point D and the check point C is denoted by $1/4 \cdot \Delta t$.

The check point B is disposed at a position corresponding to the time ts + 3, and the time interval between the check point C and the check point B is denoted by $2\Delta t + 3$.

Furthermore, the checkpoint A is disposed at a position corresponding to the time ts + 4, and the time interval between the check point B and the check point A is denoted by $2\Delta t + 3$.

In this embodiment, the voltage V(n) of the input voice signal exceeds the threshold value Lth just before the check point A in the second window WD2, from which it will be learned that the voiceless part is finished.

For this purpose, the sign B which is the discrimination sign is imparted to the voiceless part of the input voice signal in the window WD2.

In this embodiment, therefore, a sign sequence AüEB is imparted to the voiceless part of the input voice signal, and the discrimination signs are read at the time of reproduction in order to execute the reproduction operation while inserting the voiceless part in a predetermined position of a predetermined input voice signal that is reproduced for a period of time that corresponds to the discrimination signs $A \cdot B$.

Described below is the operation of the reproducing means 200 that reproduces the recording means of Fig. 2 in which digital voice has been recorded.

A digital voice signal recorded in the recording means 11 is read out by the reading means 112 and is input to the detection means 12 and to the adjusting means 13. The detection means 12 detects the signs A to D or a signal and a sign that indicate the start of voiceless part shown in Fig. 5-(A), applies them to the window shown in Fig. 5(A), restores the voiceless part having a time width corresponding to the sign, and outputs it to the adjusting means 13 which inserts the voiceless part output from the detection means 12 in the portions of signs A to D of the digital voice. When the detection means 12 detects the sign A repetitively, part or all of the time widths of signs A to D shown in Fig. 5(A) is lengthened, and the time width of the restored voiceless part is automatically lengthened in proportion to the number of repetitions.

As described above, the voiceless part is automatically replaced by a small amount of signs at the time of recording, and the voiceless time is correctly restored very conveniently and ideally even by using a small amount of signs at the time of reproduction. In addition, the processing time for restoration is so short that the reproduced voice output is not interrupted.

Imparting the above-mentioned signs A to D and the content of processing based on the signs are only illustrative of the invention, and it should be noted that the invention is in no way limited thereto.

The device constituted by using the above-mentioned embodiment should be of a portable size. The device constituted in the form of a study book may additionally have a function for repetitively outputting the voice and a function of a bookmarker. The size of the device is determined depending upon the size of the recording medium. Therefore, the recording medium should be small in size and should have a large capacity as represented, for example, by a CD-ROM, a magneto-optical mini-disc, a 3.5-inch floppy disk, a digital audio tape or the like.

The digital voice may be obtained by subjecting a synthesized voice or natural voice to A/D conversion or compression without any limitation, which is converted by an existing system.

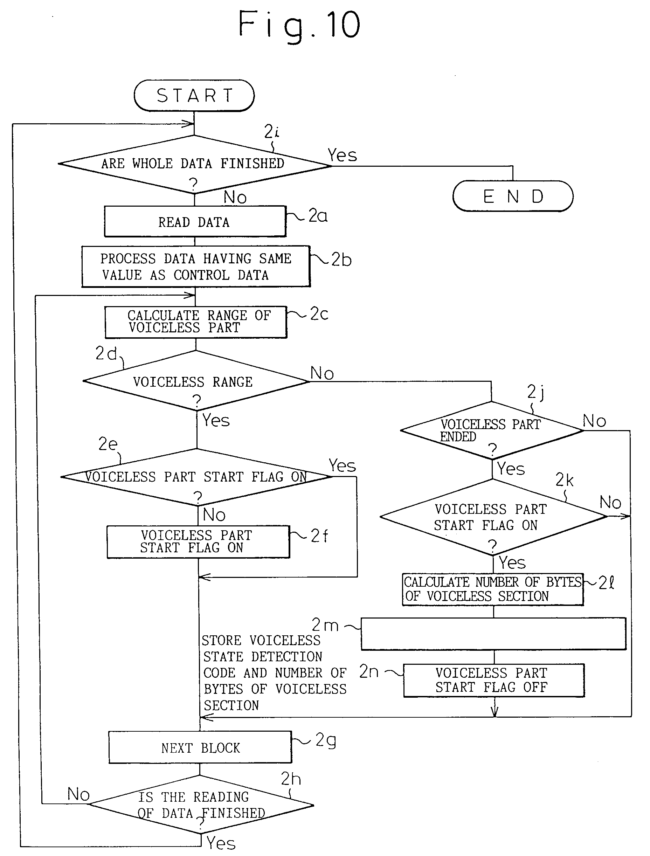

Next, described below is a method of determining whether a voiceless part is included in the input voice signal or not according to the procedure shown in a flow chart of Fig. 10 which is based on the use of software. The device basically employs the constitution shown in Fig. 1. First, a step 2a inputs a predetermined amount of voice data that has been digitized. Here, the predetermined amount is a number such as 1024 units which varies depending upon a storage element for temporary storage. However, the predetermined amount may often not be used.

In order to distinguish voice data from a control code that is set to be used as a sign for representing the voiceless part in a step 2b, the data which is the same as, or is similar to, the control code is changed. This change is accomplished by, for example, adding + 1 (increment) to the data.

The content of the voice data is changed by + 1 (increment) without, however, at all affecting the reproduced output voice. Next, a step 2c executes the calculation for determining the start and end of the voiceless part. The calculation is carried out by dividing voice data into predetermined block units (e.g., each block consists of 64 data) to obtain data such as voice amplitude distribution in the block. A step 2d detects how much the amplitude distribution of data obtained in the step 2c exists in a predetermined range (e.g., 800h ≤ X ≤ 80Fh). If the data in a block occupies more than 90% of the voiceless range, this is tentatively regarded to be the start of a voiceless part (yes), and the answer (no) is output in other cases. When the answer is (yes) at the step 2d, it is examined at a step 2e whether a voiceless part start flag is turned on or not. When the flag is not turned off, the start of the voiceless part is reliably determined at this moment, whereby the answer (no) is output and the voiceless flag is turned on at a point where the voiceless part is tentatively started (step 2f). When the voiceless part start flag has been turned on already in the step 2e, the data is just in the voiceless part and the answer (yes) is output. A step 2g reads the next predetermined number of blocks and a step 2h determines whether the data blocks have been finished or not. When the data blocks have been finished, the answer (yes) is output and when the data blocks have not been finished, the program returns back to the step 2c of calculating the voiceless range. When the data blocks have been finished, a step 2i determines whether all the data have been finished or not. When all the data have not been finished, the answer (no) is output, and the step 2a reads again 1024 data, temporarily stores the data, and the processings subsequent to the step 2a are executed.

When the data is not in the voiceless range in the step 2d, the answer (no) is output, and a step 2j determines whether this is the end of the voiceless part or not. The state in which more than 50% of the predetermined number of data does not exist in the voiceless range serves as a reference of judgement. When it is judged at the step 2j that the voiceless part has finished (yes), the program proceeds to a step 2k. When the answer is (no), the data is not the voiceless part and the program proceeds to the step 2g where the next predetermined number of data blocks are read. The step 2k judges whether the voiceless part start flag is turned on or not. When it is turned off, the answer (no) is output and the program proceeds to the step 2g. When the voiceless part start flag is turned on, the answer is (yes) and the step 2l calculates the number of bytes in the voiceless section. Here, when the interval between the point of tentatively starting the voiceless part and the point of tentatively ending the voiceless part is longer than a predetermined period of time, there are set a point of truly starting the voiceless part and a point of truly ending the voiceless part. When a duration of the voiceless part that is set depending upon the cases is shorter than the predetermined period of time, then this duration is not regarded as a voiceless section and is neglected. This processing is suited for preventing the occurrence of offensive feeling during the reproduction that stems from when a voiceless state exists between sound and another sound while the recitation is continuing and when this state is regarded to be the object of deletion and is deleted. A step 2m determines a control code relying upon the detection of the voiceless state and further determines a byte number code that represents the voiceless section, which are then stored in the voice data. A step 2n turns the voiceless part start flag off. Thus, a series of voiceless state detection processes are finished, and the program proceeds to the step 2g to read the next data block.

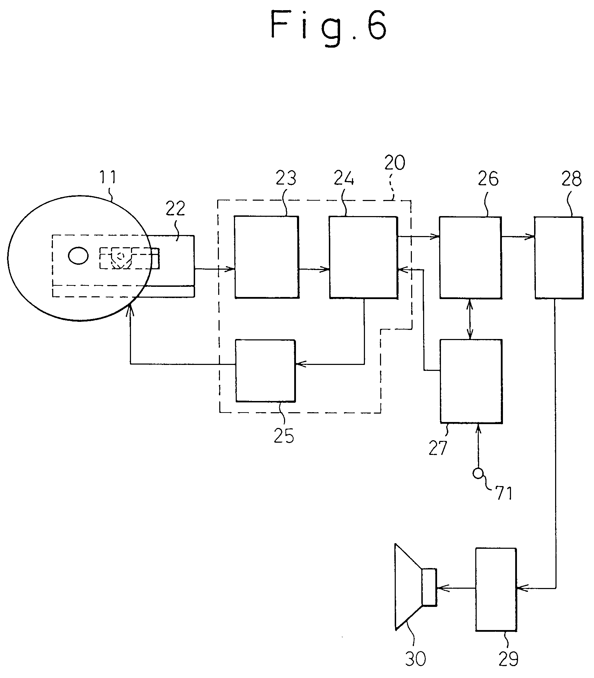

Next, the voice recording/reproducing device according to another embodiment of the present invention will be described with reference to Figs. 6 to 8.

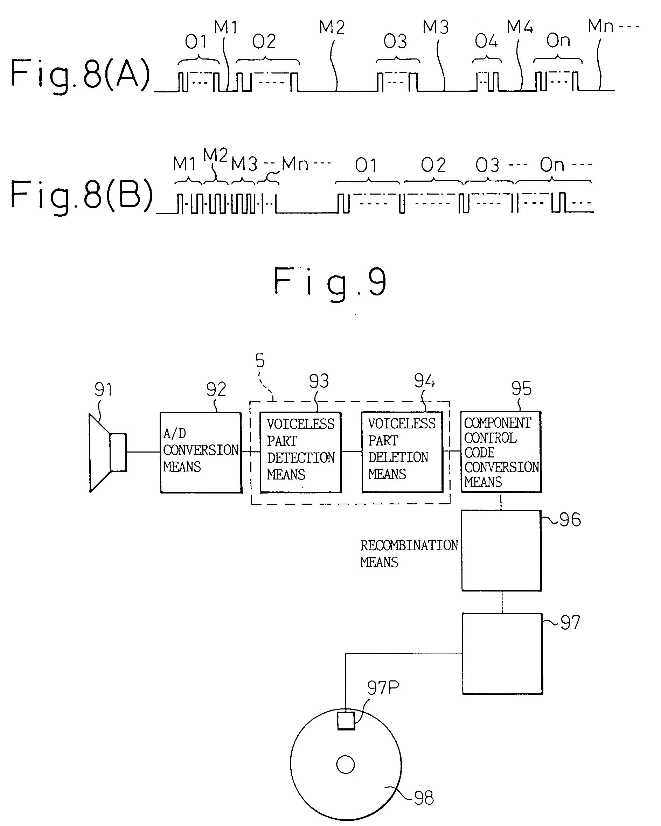

The voiceless part referred to in the present invention is a voiceless part or a part close to voiceless state between syllables or between clauses as mentioned earlier. The substantial encoding of the voiceless part will be to convert the whole or part of the voiceless part designated at 31 in Fig. 3(A) into a state designated at 32 in Fig. 3-(B), or to convert the voiceless part designated at 41 in Fig. 4(A) into another sign 42 shown in Fig. 4-(B), or to collect the whole or part of the voiceless parts (M1, M2, ---, Mn, ---) into a particular region as shown in Fig. 8(B) for the voice parts (01, 02, ---, 0n, ---) that are shown in Fig. 8(A).

Fig. 6 is a block diagram illustrating the constitution of the voice recording/reproducing device according to another embodiment of the present invention, wherein reference numeral 11 denotes a recording medium or a recording means which may be a magneto-optical disc such as a MD or MO, an optical disc such as a CD or MD, a magnetic disk or an IC memory medium, which is small in size and has a large capacity.

Reference numeral 22 denotes a drive element such as a spindle motor or a sled motor for driving the recording medium 11 and a pick-up. The drive element may not be provided depending upon the kind of the recording medium.

Reference numeral 23 denotes an RF amplifier which amplifies and shapes the signals that are read, 24 denotes an adjusting means which is constituted by a DSP or the like and corrects errors, and is further equipped with an EFM demodulation means when a PLL or a general-purpose DC reproduction device is used, reference numeral 25 denotes a drive means which reads the number of revolutions of the drive element 22 and determines the positioning, 26 denotes a voiceless part conversion means which is constituted by a microcomputer or an ASIC and reproduces the encoded voiceless part depending upon the code thereof and an input from an external unit, reference numeral 27 denotes an input control means which is constituted by a microcomputer or the like and outputs a control signal that is based upon an input signal from an external input 71 and an output signal of the voiceless part conversion means 26 and feeds the control signal to the adjusting means 24 and to the voiceless part conversion means 26. That is, in this embodiment, a voiceless part indication conversion means 20 is constituted by the RF amplifier 23, adjusting means 24 and voiceless part conversion means 26.

Reference numeral 28 denotes a D/A conversion means which converts a digital voice signal into an analog signal and outputs it. When the data have been compressed such as by ADPCM or ATC, a restoration processing corresponding thereto will be further included.

Reference numeral 29 denotes an amplifier means which amplifies an analog voice signal and outputs it, and reference numeral 30 denotes a voice output means which is constituted by a speaker, an earphone or the like.

The operation will now be described.

A mixture signal consisting of a digital voice signal obtained from the recording medium 11 via the drive element 22 and encoded voiceless data, such as a signal 32 of Fig. 3(B) or a signal 42 of Fig. 4(B), is amplified and shaped through the RF amplifier 23, and is input to the adjusting means 24. The adjusting means 24 corrects an error in the input data and effects EFM demodulation, and outputs a signal to the drive circuit 25 to adjust the revolving speed of the recording medium and to adjust the movement of the pick-up. The voiceless part conversion means 26 detects encoded voiceless data from the output from the adjusting means 24, converts it into voice data that represents a voiceless state and outputs it. The voiceless part conversion means 26 easily changes the range of voice data in the voiceless part in response to a signal from the input control means 27. Depending upon an input by a key or by a control knob from the input 71, the input control means 27 permits a signal corresponding to the input to be fed to the adjusting means 24. For instance, an input by a key enables the adjusting means 24 to receive a signal that is based upon such an operation as a pause, finding the head or a repeat, in order to adjust the drive circuit 25. The input control means 27 outputs a signal for adding or deleting a signal range that indicates the range of a voiceless part in order to increase or decrease the speed of speech. The voice data output by the voiceless part conversion means 26 is converted into analog voice through the D/A conversion means 28, amplified through the amplifier 29 and is reproduced by the voice output means 30. When the recording medium 11 is read with the specifications of 44.1 KHz and a resolution of about 16 bits like CD players in general, and when the D/A conversion and the like are adjusted to accomplish a relatively low processing speed and to obtain a slow speech speed such as with 8 KHz and a resolution of 4 bits or 12 bits during the restoration of a voiceless part, then, the voiceless part conversion means 26 may output a control signal to the input control means 27 in order to stop or delay the reading even temporarily. At this moment, the input control means 27 causes the adjusting means 24 to stop the reading operation while maintaining the revolving speed constant or to lower the revolving speed or to stop the operation.

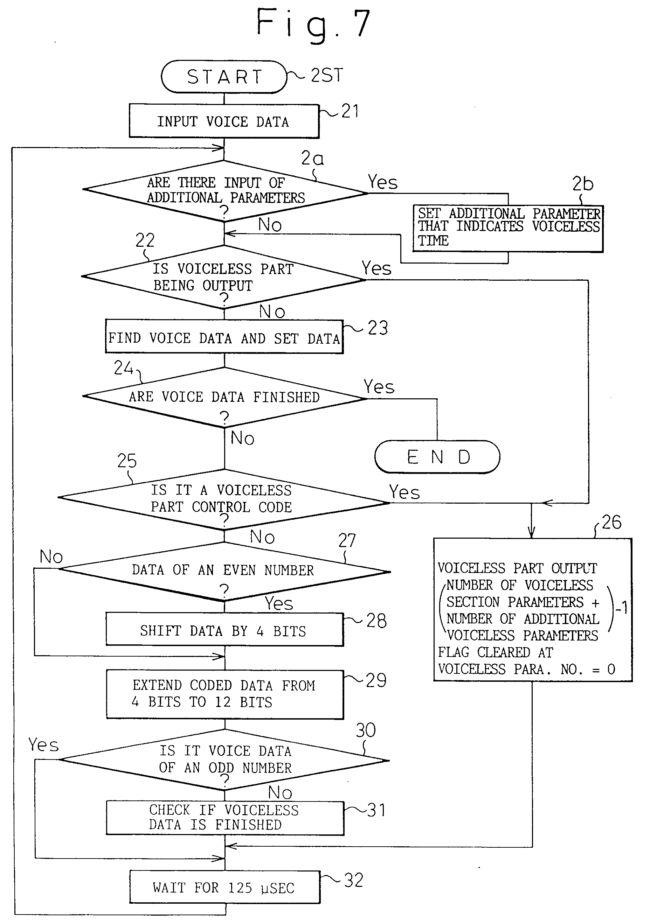

The operation of the voiceless part conversion means 26 will be concretely described with reference to Fig. 7. After started, a step 21 receives a predetermined amount of digital voice data from the adjusting means 24 and temporarily stores them in a memory. The memory will not be used when the voiceless parts are sequentially processed. After a predetermined amount of the digital voice data are received, the voiceless part conversion means 26 will, depending upon the case, output a signal to the input control means 27 to stop or suppress the reading of data from the recording medium 11. The input control means 27 outputs this input signal to the adjusting means 24 to control the drive element 22 and the like.

After a predetermined amount of the voice data are received at the step 21, a step 2a confirms the input of a parameter from the input control means 27 and determines whether a parameter is input or not. When the answer is yes, a step 2b sets the number of parameters corresponding to the input. A step 22 confirms whether the voiceless part is being output or not. This step confirms the state of a flag that indicates the output of voiceless part. When the flag indicating the output of voiceless part is raised (yes), the program proceeds to a step 26 where the voiceless part output processing is carried out. When the flag is cleared (no), the program proceeds to a next step 23 where a voice data is found and a parameter is set when there exists a control code. Then, a step 24 determines whether the processing of voice data is finished or not. When the processing is finished (yes), the operation is carried out to further read the data and comes to an end. When the operation is not finished (no), the program proceeds to a step 25 which determines whether it is a voiceless part control code or not. When it is not the voiceless part control code, the program proceeds to a step 27 assuming that the data represents the voice.

When the data is the voiceless part control code, the program proceeds to the voiceless part output processing step 26. In the voiceless part output processing of step 26, the flag indicating the output of voiceless part is raised and a data (e.g., 808h) is output to represent voice of a level 0. For a parameter that indicates the voiceless section, furthermore, a set parameter in a step 2b is added or subtracted and 1 is subtracted (decrement) from this value every time. As the added or subtracted parameter is decreased by 1 and becomes 0, the flag indicating the output of voiceless part is cleared and the voiceless part is no longer output. After the above two parameters are added or subtracted, the input parameter set at the step 2b is cleared. After the step 26 of the voiceless part output processing is finished, a step 32 waits for a time to process the next data.

In this embodiment, the sampling frequency at the time of demodulation has been set to 8 (KHz). Therefore, the step 32 waits for a time of about 125 microseconds.

When the data at the step 25 is not the voiceless part control code (no), i.e., when the data is voice data, a step 27 determines whether the data is the one of an even number. When the data is of an even number (yes), a step 28 shifts the data by four bits, i.e., shifts the data to an odd number so that it can be processed in units of bytes. Then, a step 29 extends the voice data of 4 bits to the voice data of 12 bits. The extension algorithm is as described below. The data (Y) of a first time is calculated on the level 0 (808h) and in the second and subsequent times, the data obtained according to the following calculation is used as the data of the previous time, i.e., 4-bit voice data (X) is subtracted from a reference value, multiplied by a multiplication factor (m) and to which the previous data (Y) of 12 bits is added to find 12-bit voice data,

12-Bit voice data = ((X - reference value) x m) + Y

After the voiceless part, the data of the previous time is set to level 0.

The reason why the data is extended to 12 bits is because the voice is digitized with 12 bits, though there is no particular limitation as in the above-mentioned algorithm. The multiplication factor (m) is added to the data during the recording in order to maintain accuracy at the time of restoration, and need not necessarily be used. Next, a step 30 detects the voice data of an odd number and checks if the voice data is finished at the time of an odd number only. This is to decrease the flag corresponding to the whole voice data by -1 (decrement) and to finish the procedure at the step 24 when the flag becomes 0. Here, the parameters that are set for controlling the speed of speech or the operation for the parameters are not limited to the above-mentioned examples, and can be carried out by an interrupt or by any other method. As for generating the parameters, furthermore, their values may have been stored in advance and a parameter may be read out when an input is received from an external unit in order to set the speed of speech according to the parameter, or an input fed from an external unit may be read out and the speed of speech may be controlled based upon the input. Thus, the constitution and operation thereof can be suitably selected. Moreover, the manner of processing need not be based only upon software but may be based upon hardware as well. The device constituted according to the above-mentioned embodiment should preferably be of a portable size. When it is constructed as a study book, the device will additionally have a function of repeating the voice and a function of a bookmarker. The size of the device is determined depending upon the size of the recording medium. Therefore, the recording medium should be small in size and should have a large capacity as represented, for example, by a CD-ROM, a magneto-optical mini-disc, a 3.5-inch floppy disk, a digital audio tape or the like.

The digital voice may be obtained by subjecting synthesized voice or natural voice to A/D conversion or compression without any limitation, by an existing system.

The constitution of the recording means according to a further embodiment of the present invention will now be described with reference to Fig. 9, wherein reference numeral 91 denotes a voice input means which is constituted by a microphone that forms analog voice electric signals, a filter circuit, an amplifier circuit and the like, and 92 denotes an A/D conversion means which is constituted by a sampling circuit, an A/D converter circuit and the like and may, as required, be further provided with circuits including a compression function such as PCM, PWM or ATC like ADPCM. Reference numeral 93 denotes a voiceless part detection means which changes, deletes or moves a code indicating the voiceless state that has been set in advance based on the digital voice data and data that are confused with parameter codes indicating duration, etc., and detects voiceless part, makes the voiceless part correspond to the code indicating the voiceless state and to the parameter codes indicating duration, etc., and adds the voiceless part in the voice data in an interrupting manner; 94 denotes a voiceless part deletion means which detects digital voice data by a number of voiceless section bytes that follow the voiceless part control code; and reference numeral 95 denotes a component control code conversion means which, at the time of converting an analog voice into a digital voice and at the time of restoring the voice, records 4-bit data into the recording medium by using a 12-bit conversion means, the component control code being used as a conversion parameter at the time of effecting the conversion processing from 12 bits to 4 bits or vice versa. The component control code conversion means 95 further works to convert a portion of the digital voice signal having a large change or a characteristic portion into a component control code. A portion having a large change of the voice signal or a characteristic portion will not be restored to a sufficient degree unless the amount of digital data is increased. The component control code conversion means 95 substitutes the data of this portion by the data representing quantity and number, i.e., by a component control code in order to suppress the amount of digital data, and works to obtain analog voice signals close to the original waveforms during the reproduction when the voice data recorded in the recording medium has a number of bits of as small as about 4 bits.

Reference numeral 96 denotes a recombination means which, when a control code such as voiceless control code and voice data exist being mixed together in a predetermined section, replaces the voiceless control code by voice data that represents the voiceless state and stores the control code in the head of the next section. The state in which the voice data and the control code are mixed together in the predetermined section is a case where a processing means such as the CPU has a processing ability of 8 bits and the voice data sequence is divided by 8 bits so that it can be easily processed, and the voice data and the control data are contained in the 8 bits.

In such a state, the code of the lower 4 bits is placed at the head of the next predetermined section and, instead, a voice data that represents the voiceless state is substituted for that place, in order to distinguish the code and the voice data from each other. The recombination means also has a means for encoding the digital voice with 4 bits.

Reference numeral 97 denotes a recording signal adjusting means which changes a signal of a required form in response to an input so that it can be written into the recording medium. In this case, a customarily used means is included such as EFM modulation.

Reference numeral 97p denotes a pick-up for writing which is suitably selected depending upon the kind of the recording medium 98. The recording signal adjusting means 97 is constituted by one or a plurality of DSPs and a microcomputer, and is suitably selected depending upon the size of the device and the processing ability.

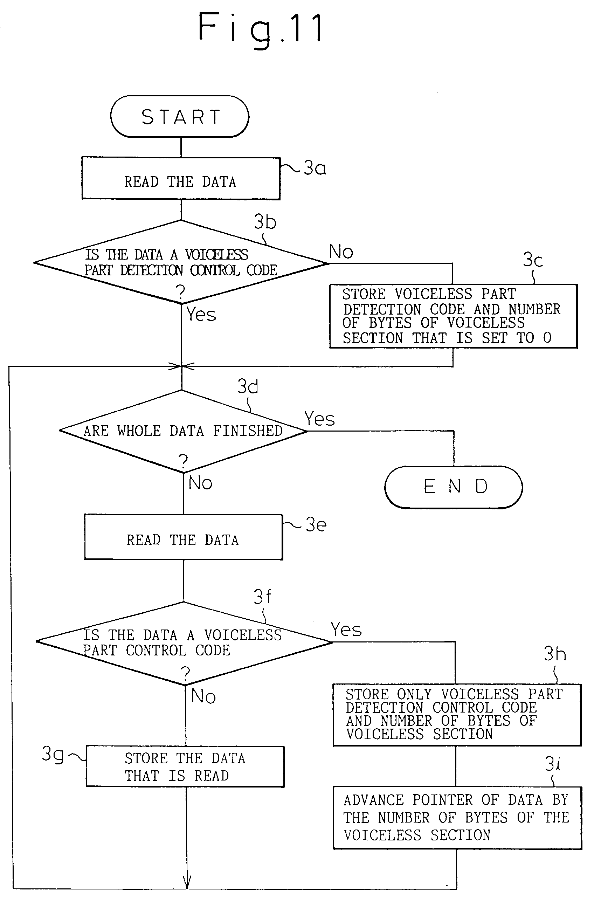

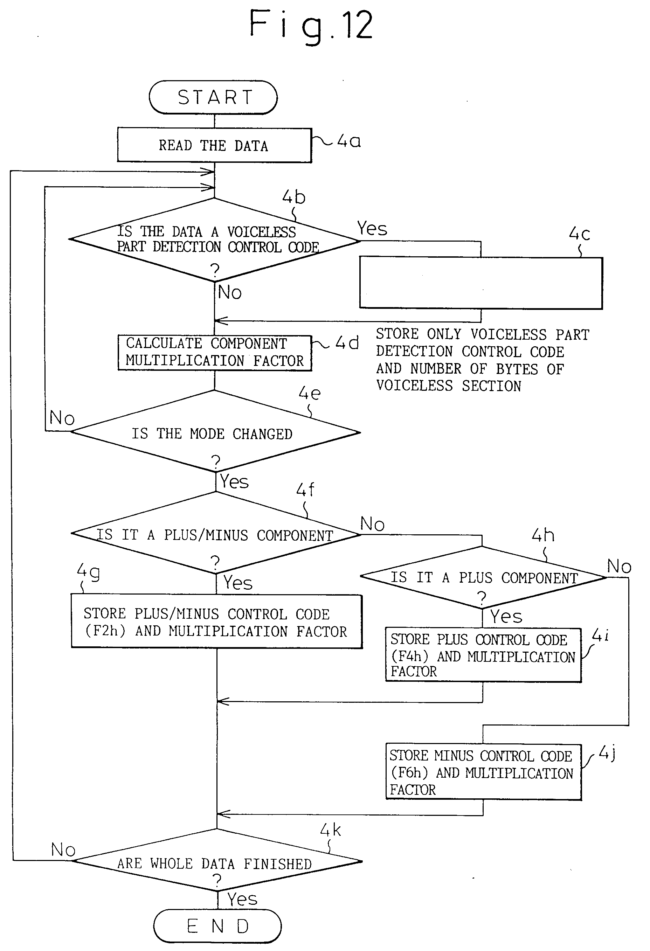

The operation procedure of the voiceless part deletion means 94 of Fig. 9 will now be described with reference to flow charts shown in Figs. 11 and 12. A mixed data sequence consisting of voiceless signals and voice data is input by the voiceless part detection means 93 to the voiceless part deletion means 94 where voice data representing a voiceless state are deleted.

A step 3a reads the mixed data from the voiceless part detection means 93 directly or via a buffer or the like.

A step 3b discriminates whether the first data is a voiceless part detection control code or not. When it is a voiceless part detection control code (yes), the program proceeds to a next step 3d. When it is not (no), the voiceless part detection control code and the number 0 of bytes of the voiceless section are stored in buffer memory, and the program proceeds to a step 3d where it is judged whether the processing has finished for all of the data. When the processing has not finished (no), the mixture data sequence is read again.

Then, a step 3f discriminates whether the data is a voiceless part detection control code or not. When it is the voiceless part detection control code (yes), a step 3h stores only the voiceless part detection control code and the number of bytes representing the voiceless section, and the data are skipped. Then, a step 3i advances the data pointer by the number of bytes of the voiceless section corresponding to the voiceless part detection control code and deletes the data by the number of bytes of the voiceless section. When the data at the step 3f is not the voiceless part detection control code (no), it is so determined that the data that is read is the voice data which is then stored in the buffer. By repeating the above-mentioned processings, all of the data are rearranged into a data sequence of voice data, voiceless part detection control code and a code of the byte number of the voiceless section. After the data are sequentially deleted or are deleted by a predetermined amount, the output of the voiceless part deletion means 94 is input to the component control code conversion means 95.

Referring next to Fig. 12, a step 4a reads the data output from the voiceless part deletion means 94. In the description of this embodiment, there are 256 units of data to be read and that are processed as one unit.

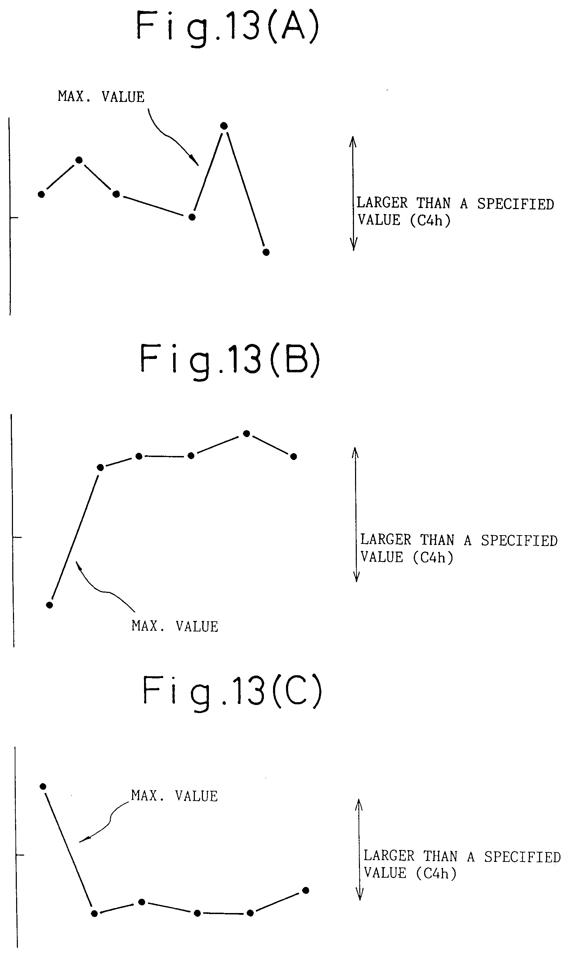

A step 4b discriminates whether the data to be processed is a voiceless part detection control code or not. When it is the control code (yes), the voiceless part detection control code and the number of bytes of the voiceless section only are stored in the buffer, and the data are skipped and the program proceeds to a step 4d. When the data is not the voiceless part detection control code, the program proceeds to the step 4d where a difference is found between the previous data and the present data, and a maximum value in the same mode is found from the differential data. The step 4d discriminates whether the mode is changed. When the mode is changed (yes), the program proceeds to a step 4e. In the case of the same mode (no), the program proceeds to the step 4a where the next data is processed. The step 4e discriminates whether the change of mode is to a plus/minus component mode. The plus/minus component mode is, as shown in Figs. 13(A) to 13(C), for data which changes little, has plus and minus components, and has a difference smaller than a predetermined value relative to the neighboring data.

In the step 4e, the answer (yes) is output when the data corresponds to the plus/minus component mode and the answer (no) is output when the data does not correspond to it. When (yes) is output, a plus-minus control code corresponding to the plus/minus component mode and a multiplication factor code are stored in the voice code data. The multiplication code compensates for a lack of bit expression in the amount of change in the voice data and expresses the amount of change in the voice data relying upon the multiplication factor. The reference of multiplication factor code is arbitrary and is suitably selected depending upon the digital bit expression of voice data and sample frequency.

When the sample frequency is 8 KHz and when the voice data and control code digital data recorded in the recording medium have 4 bits, the multiplication factor is set as described below. The directivity of plus or minus is determined with 7 as a reference value. That is, the component has a minus sign for 0 to 6 and has a plus sign for 8 to 14(Eh). In this case, a maximum amount of change is 7. A multiplication factor of one change is found from a maximum difference (B)(Fig. 13(A))-/maximum amount of change.

When the answer at the step 4e is (no), the program proceeds to a step 4g which discriminates coincidence or non-coincidence of differential data in the plus component mode. When the differential data coincide with each other, the plus control code corresponding to the plus component mode and the multiplication factor are stored in the voice data. The multiplication factor at this moment is set, for example, as described below. Being expressed by 1 to 14(Eh) with 0 as a reference value, a maximum amount of change is set to 14.

Next, a multiplication factor (maximum difference/maximum amount of change) is calculated to find a multiplication factor per change. At a step 4h, the plus control code and the multiplication factor are stored in a portion of the voice data detected in the plus component mode.

When the answer at a step 4g is (no), a step 4i stores the minus control code and the multiplication factor in a corresponding portion in the voice data. The multiplication factor of minus component does not require the data that indicates the directivity and is expressed by 0 to 13(Dh) with 14 as a reference value. A maximum amount of change (maximum difference/maximum amount of change) is 14, and a multiplication factor-per a change is found.

The data in which the voice data and the component multiplication factor control code are mixed are input to the recombination means 96. The recombination means 96 encodes the voice data into 4 bits from 12 bits in the mixed data and recombines the voice data and the control code.

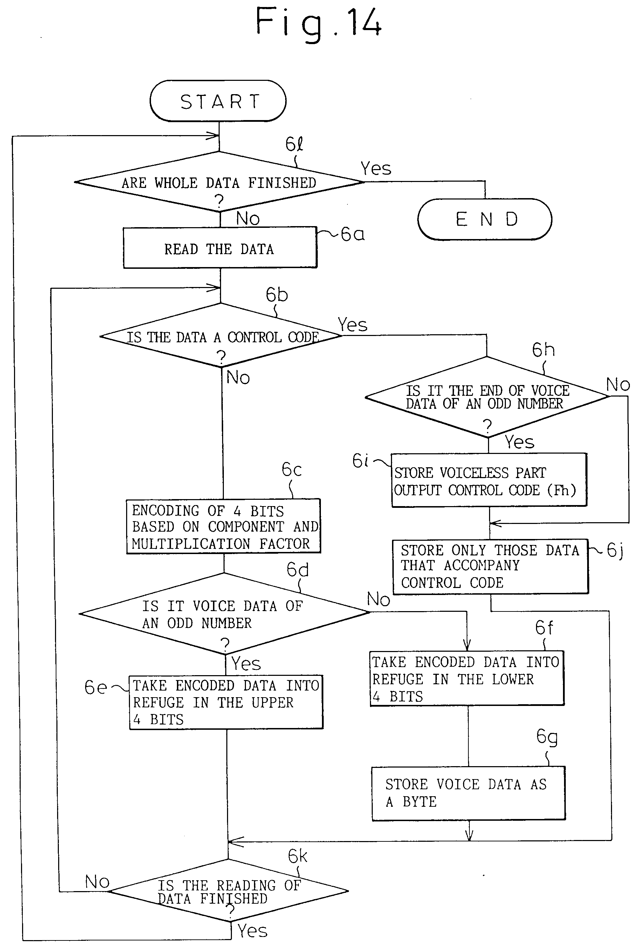

The operation of the recombination means 96 of Fig. 9 will now be described with reference to a flow chart of Fig. 14.

A step 6a reads the data and processes the data by dividing them into a predetermined number. A step 6b determines whether the data is a control code. When the data is not a control code (no), i.e., when the data is voice data, a step 6c executes the encoding of 4 bits. In this case, the encoding of 4 bits may be effected based upon the component and the data of the multiplication factor. Described below is a method of conversion from 12 bits to 4 bits.

The first time (n-1), the calculation is carried out on the level 0 (808h), and the second and subsequent times, the data obtained through the following calculation is used as the previous data. A difference in the data is divided by a

multiplication factor (m) to obtain a value of change necessary for this difference.

4-Bit voice data = $(((n) - (n-1))/m)$ + reference value

The component and the multiplication factor are determined by the control code conversion means (95) described earlier, and the component control code and the multiplication factor having signs indicating they have not yet been rewritten are effectively used until they are rewritten.

A step 6d determines whether the voice data encoded into 4 bits are of an even number or an odd number. When the voice data are of an even number (yes), the encoded data are stored in the upper 4-bit register. After the data are stored in the upper and lower bits, a step 6g stores in the buffer memory the encoded data of a total of one byte comprized of upper 4 bits and lower 4 bits. When the data is a control code at the step 6b, a step 6h determines whether the voice data is the end of data of an odd number. When it is the end of data of the odd number (yes), data representing a voiceless state is stored in the control code and, at the same time, the control code is stored in the next upper 4 bits. A step 6j additionally stores a component control code (kind, multiplication factor, etc.) that accompanies the control code (Fh). When the voice data ends at an odd number at the step 6h (no), the processing of the step 6j is carried out. The data in which the voice data and the control code are rearranged are written into a temporary or a main recording medium 18 via the recording signal adjusting means 97 and the pick-up 97P for writing.

According to the present invention as described above in detail, even a recording medium that is generally used can be used for reproducing a voice reciting a book for a sufficiently long period of time while making it possible to freely change the speed of speech during the reproduction and to output voice which is little different from that of the ordinary recitation.

Through keen study, the present inventors have realized a voice recording/reproducing device that is capable of varying the speed of recitation such as of when the user wants to listen to the recitation of a study book or an explanatory book at a slow speed or when the user wants to listen to the recitation at a fast speed, by recording digital voice data in a recording medium in a manner in which the voiceless parts are substantially encoded, by adding voiceless time at the time of the reproduction, thus enabling the voice data to be recorded in sufficient amounts in the recording medium and, in addition, making it possible to obtain voice output close to natural recitation for extended periods of time as a result of addition of data related to the original voiceless part during the reproduction and addition of voiceless part data of a desired time duration.

**Claims**

1. A voice reproducing device comprising a voice signal recording means for recording a voice signal of which a voiceless part is converted into a predetermined voiceless part indication data signal, and a voice reproducing means which reproduces the recorded voice signal at a desired speed of speech.

2. A voice recording/reproducing device comprising a voiceless part indication conversion means which converts a voiceless part included in an input voice signal into a predetermined voiceless part indication data signal, and a recording means for recording an input voice signal including the voiceless part indication data signal converted by the voiceless part indication conversion means.

3. A voice recording/reproducing device comprising a voiceless part indication conversion means which converts a voiceless part included in an input voice signal into a predetermined voiceless part indication data signal, a recording means for recording an input voice signal including the voiceless part indication data signal converted by the voiceless part indication conversion means, and a voice reproducing means for reproducing an input voice signal recorded in said recording means at a desired speed of speech.

4. A voice recording/reproducing device according to any one of claims 1 to 3, wherein provision is further made of an adjusting means for adjusting the speed of speech during the reproduction of voice by said voice reproducing means.

5. A voice recording/reproducing device according to any one of claims 1 to 4, wherein the voiceless part indication data signal in said voiceless part indication conversion means is a signal for deleting said voiceless part.

6. A voice recording/reproducing device according to any one of claims 1 to 4, wherein the voiceless part indication data signal in said voiceless part indication conversion means is a signal representing data related to the time of said voiceless part.

7. A voice recording/reproducing device according to any one of claims 1 to 4, wherein the voiceless part indication data signal in said voiceless part indication conversion means is a signal representing data related to a position in said input voice signal in which said voiceless part is disposed.

8. A voice recording/reproducing device according to any one of claims 1 to 4, wherein a plurality of said voiceless part indication data signals output from said voiceless part indication conversion means are stored in a concentrated manner at a predetermined position of said recording means.

9. A voice recording/reproducing device according to any one of claims 1 to 8, wherein, in reproducing said input voice signals, said voice reproducing means reproduces said voiceless part indication data signals recorded in said recording means while inserting them in predetermined positions in a sequence of said input voice signals according to predetermined data that have been imparted to said voiceless part indication data signals.

# Fig.1

# Fig.2

Fig.3(A)

Fig.3(B)

Fig.4(A)

Fig.4(B)

# Fig.5(A)

# Fig.5(B)

# Fig.6

# Fig. 7

START ~2ST

INPUT VOICE DATA ~21

ARE THERE INPUT OF ADDITIONAL PARAMETERS ? — Yes → SET ADDITIONAL PARAMETER THAT INDICATES VOICELESS TIME (2b)

2a · No

22 · IS VOICELESS PART BEING OUTPUT ? — Yes

No

FIND VOICE DATA AND SET DATA ~23

24 · ARE VOICE DATA FINISHED ? — Yes → END

No

25 · IS IT A VOICELESS PART CONTROL CODE ? — Yes

No

27 · DATA OF AN EVEN NUMBER ? — No

Yes

SHIFT DATA BY 4 BITS ~28

EXTEND CODED DATA FROM 4 BITS TO 12 BITS ~29

30 · IS IT VOICE DATA OF AN ODD NUMBER ? — Yes

No

CHECK IF VOICELESS DATA IS FINISHED ~31

WAIT FOR 125 μSEC ~32

VOICELESS PART OUTPUT (NUMBER OF VOICELESS SECTION PARAMETERS + NUMBER OF ADDITIONAL VOICELESS PARAMETERS) -1 FLAG CLEARED AT VOICELESS PARA. NO. = 0 (26)

Fig.8(A)

Fig.8(B)

Fig.9

A/D
CONVERSION
MEANS

VOICELESS
PART
DETECTION
MEANS

VOICELESS
PART
DELETION
MEANS

COMPONENT
CONTROL
CODE
CONVERSION
MEANS

RECOMBINATION
MEANS

# Fig.10

```
                    ┌─────────────┐
                    │   START     │
                    └─────────────┘
                            │
                            │        2i
                    ◇───────────────────◇  Yes
                    ARE WHOLE DATA FINISHED ──────────┐
                            ?                          │
                          No                    ┌─────────────┐
                    ┌──────────────┐    2a      │   E N D     │
                    │  READ DATA   │            └─────────────┘
                    └──────────────┘
                            │           2b
                    ┌──────────────────────┐
                    │ PROCESS DATA HAVING SAME │
                    │ VALUE AS CONTROL DATA    │
                    └──────────────────────┘
                            │           2c
                    ┌──────────────────────┐
                    │ CALCULATE RANGE OF   │
                    │ VOICELESS PART       │
                    └──────────────────────┘
                            │
                2d  ◇───────────────────◇  No
                    VOICELESS RANGE ────────────────────────┐
                            ?                                 │  2j
                          Yes                        ◇───────────────◇  No
                                                     VOICELESS PART    ─────┐
        2e  ◇──────────────────────────◇  Yes       ENDED             │
            VOICELESS PART START FLAG ON ────┐          ?              │
                    ?                        │        Yes             │
                  No                         │              2k        │
        ┌──────────────────┐    2f          │    ◇───────────────◇  No│
        │ VOICELESS PART   │                │    VOICELESS PART   ────┤
        │ START FLAG ON    │                │    START FLAG ON        │
        └──────────────────┘                │          ?              │
                    │◄───────────────────────┘        Yes             │
                    │                        ┌────────────────────┐   │
                    │                    2ℓ  │CALCULATE NUMBER OF BYTES│
                    │                        │OF VOICELESS SECTION│   │
                    │                        └────────────────────┘   │
        2m ┌────────────────────────┐                                 │
           │STORE VOICELESS         │                                 │
           │STATE DETECTION         │       2n ┌────────────────────┐ │
           │CODE AND NUMBER OF      │          │ VOICELESS PART     │ │
           │BYTES OF VOICELESS      │          │ START FLAG OFF     │ │
           │SECTION                 │          └────────────────────┘ │
                    │◄──────────────────────────────────────────────┘
        ┌──────────────────┐   2g
        │   NEXT BLOCK     │
        └──────────────────┘
                    │           2h
        No  ◇───────────────────◇
        ────  IS THE READING
              OF DATA FINISHED
                    ?
                  Yes
```

# Fig.11

START

READ THE DATA ～3a

IS THE DATA A VOICELESS
PART DETECTION CONTROL CODE
? — 3b

No →

STORE VOICELESS PART
DETECTION CODE AND NUMBER
OF BYTES OF VOICELESS
SECTION THAT IS SET TO 0 — 3c

Yes

ARE WHOLE DATA FINISHED
? — 3d

Yes → END

No

READ THE DATA ～3e

IS THE DATA A VOICELESS
PART CONTROL CODE
? — 3f

Yes →

STORE ONLY VOICELESS PART
DETECTION CONTROL CODE
AND NUMBER OF BYTES OF
VOICELESS SECTION — 3h

No

3g ～ STORE THE DATA
THAT IS READ

ADVANCE POINTER OF DATA BY
THE NUMBER OF BYTES OF THE
VOICELESS SECTION — 3i

EP 0 652 560 A1

# Fig.12

```
        ┌─────────────┐
        │   START     │
        └─────────────┘
               │
    ┌──────────────────────┐
    │   READ THE DATA      │──── 4a
    └──────────────────────┘
               │
          ╱─────────╲   4b
         ╱  IS THE DATA A  ╲    Yes
        ╱ VOICELESS PART    ╲───────────┐
        ╲ DETECTION CONTROL ╱           │
         ╲    CODE  ?      ╱             │
          ╲──────╱                      │
              │ No                ┌──────────────────────────┐  4c
              │                   │                          │
              │                   └──────────────────────────┘
              │                    STORE ONLY VOICELESS PART
    ┌──────────────────────┐      DETECTION CONTROL CODE
    │ CALCULATE COMPONENT  │─ 4d  AND NUMBER OF BYTES OF
    │ MULTIPLICATION FACTOR│      VOICELESS SECTION
    └──────────────────────┘
              │
          ╱─────────╲  4e
   No    ╱ IS THE MODE ╲
  ┌─────╲   CHANGED ?  ╱
  │      ╲───────────╱
  │           │ Yes
  │       ╱─────────╲  4f
  │      ╱ IS IT A PLUS/  ╲   No
  │     ╱ MINUS COMPONENT ╲──────────┐
  │     ╲       ?        ╱            │
  │      ╲──────╱                 ╱─────────╲  4h
  │   4g     │ Yes               ╱ IS IT A PLUS ╲  No
  │  ┌──────────────────────┐    ╲ COMPONENT ?  ╱──────┐
  │  │ STORE PLUS/MINUS     │     ╲──────╱             │
  │  │ CONTROL CODE (F2h)   │        │ Yes             │
  │  │ AND MULTIPLICATION   │  ┌──────────────────┐ 4i │
  │  │ FACTOR               │  │ STORE PLUS       │    │
  │  └──────────────────────┘  │ CONTROL CODE(F4h)│    │
  │           │                │ AND MULTIPLICATION│   │
  │           │                │ FACTOR           │    │
  │           │                └──────────────────┘    │
  │           │◄─────────────────────┘                 │
  │           │                                         │
  │           │        ┌──────────────────┐  4j        │
  │           │        │ STORE MINUS      │◄───────────┘
  │           │        │ CONTROL CODE(F6h)│
  │           │        │ AND MULTIPLICATION│
  │           │        │ FACTOR           │
  │           │        └──────────────────┘
  │           │◄────────────┘
  │       ╱─────────╲  4k
  │  No  ╱ ARE WHOLE  ╲
  └─────╲ DATA FINISHED╱
         ╲   ?       ╱
          ╲──────╱
              │ Yes
        ┌─────────────┐
        │   E N D     │
        └─────────────┘
```

22

# Fig.13(A)

MAX. VALUE

LARGER THAN A SPECIFIED
VALUE (C4h)

# Fig.13(B)

LARGER THAN A SPECIFIED
VALUE (C4h)

MAX. VALUE

# Fig.13(C)

MAX. VALUE

LARGER THAN A SPECIFIED
VALUE (C4h)

# Fig.14

START

6ℓ
ARE WHOLE DATA FINISHED ? — Yes → E N D

No

6a
READ THE DATA

6b
IS THE DATA A CONTROL CODE ? — Yes

No

6h
IS IT THE END OF VOICE DATA OF AN ODD NUMBER ? — No

Yes

6i
STORE VOICELESS PART OUTPUT CONTROL CODE (Fh)

6c
ENCODING OF 4 BITS BASED ON COMPONENT AND MULTIPLICATION FACTOR

6j
STORE ONLY THOSE DATA THAT ACCOMPANY CONTROL CODE

6d
IS IT VOICE DATA OF AN ODD NUMBER ? — No

Yes

6e
TAKE ENCODED DATA INTO REFUGE IN THE UPPER 4 BITS

6f
TAKE ENCODED DATA INTO REFUGE IN THE LOWER 4 BITS

6g
STORE VOICE DATA AS A BYTE

6k
IS THE READING OF DATA FINISHED ? — No

Yes

24

Fig.15

# INTERNATIONAL SEARCH REPORT

| International application No. |
|---|
| PCT/JP94/00661 |

**A. CLASSIFICATION OF SUBJECT MATTER**

Int. Cl⁵ G11B20/10

According to International Patent Classification (IPC) or to both national classification and IPC

**B. FIELDS SEARCHED**

Minimum documentation searched (classification system followed by classification symbols)

Int. Cl⁵ G11B20/10, G11B20/02

Documentation searched other than minimum documentation to the extent that such documents are included in the fields searched

Jitsuyo Shinan Koho        1965 – 1993
Kokai Jitsuyo Shinan Koho   1971 – 1993

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, A, 59-195307 (Casio Computer Co., Ltd.), November 6, 1984 (06. 11. 84), (Family: none) | 1-3 |
| X | JP, A, 62-125577 (NEC Corp.), June 6, 1987 (06. 06. 87), (Family: none) | 1-3 |
| A | JP, A, 60-35795 (Akai Electric Co., Ltd.), February 23, 1985 (23. 02. 85), (Family: none) | 4-9 |

☐ Further documents are listed in the continuation of Box C.     ☐ See patent family annex.

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 18, 1994 (18. 07. 94) | August 9, 1994 (09. 08. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)